(19) Europäisches Patentamt
European Patent Office
Office européen des brevets

(11) EP 4 227 428 A1

(12) EUROPEAN PATENT APPLICATION
published in accordance with Art. 153(4) EPC

(43) Date of publication:
16.08.2023 Bulletin 2023/33

(51) International Patent Classification (IPC):
C22C 14/00 (2006.01)        C22C 1/08 (2006.01)
B22F 3/11 (2006.01)

(21) Application number: 21877339.8

(22) Date of filing: 16.09.2021

(52) Cooperative Patent Classification (CPC):
B22F 3/11; C22C 1/08; C22C 14/00; Y02E 10/542;
Y02P 70/50

(86) International application number:
PCT/JP2021/034169

(87) International publication number:
WO 2022/075038 (14.04.2022 Gazette 2022/15)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.10.2020 JP 2020168768

(71) Applicants:
• Toho Titanium CO., LTD.
Chigasaki-shi
Kanagawa 253-8510 (JP)

• TOYOTA JIDOSHA KABUSHIKI KAISHA
Toyota-shi
Aichi 471-8571 (JP)

(72) Inventors:
• TSUMAGARI, Shougo
Chigasaki-shi, Kanagawa 253-8510 (JP)
• INOUE, Yosuke
Chigasaki-shi, Kanagawa 253-8510 (JP)
• KAWAI, Hiroyuki
Toyota-shi, Aichi 471-8571 (JP)

(74) Representative: Mewburn Ellis LLP
Aurora Building
Counterslip
Bristol BS1 6BX (GB)

(54) PRODUCTION METHOD FOR POROUS METAL BODY, AND POROUS METAL BODY

(57) A method for manufacturing a porous metal body according to the present invention is a method for manufacturing a sheet-shaped porous metal body 4a containing titanium by sintering a titanium-containing powder 4 by heating it on a forming surface 2 of a forming die 1, the method including: an area setting step of setting, on the forming surface 2 of the forming die 1, an adhesion area Aa where it is located on an outer edge side of the forming surface 2 and the titanium-containing powder 4 adheres during sintering without a releasing layer 3, and an easily releasable area Ar where a releasing layer 3 is formed; after the area setting step, a powder deposition step of depositing the titanium-containing powder 4 in a dry process on the forming surface 2; and after the powder deposition step, a powder sintering step of sintering the titanium-containing powder 4 on the forming surface 2 while heating the titanium-containing powder 4 at a temperature of 950°C or more on the forming surface 2 and allowing the titanium-containing powder 4 located on the adhesion area Aa to adhere to the adhesion area Aa.

FIG. 2

**Description**

FIELD OF THE INVENTION

The present invention relates to a method for manufacturing a sheet-shaped porous metal body containing titanium, and a porous metal body.

BACKGROUND OF THE INVENTION

Titanium and titanium alloys are known to be materials having excellent corrosion resistance due to the formation of passivation films on their surfaces. It is expected that, utilizing such high corrosion resistance, the titanium or titanium alloy will be used, for example, as a porous conductive material that is used in an environment where it can be corroded and requires the necessary air permeability or liquid permeability.

For the porous metal body containing titanium, Patent Literature 1 discloses "a porous conductive plate which is used as a power feeder in a polymer electrolyte-type water electrolytic tank or a current collector in a solid polymer-type fuel cell, and is comprised of a sintered body of spherical gas-atomized titanium powder". As a method for manufacturing the "porous conductive plate", Patent Literature 1 discloses that:

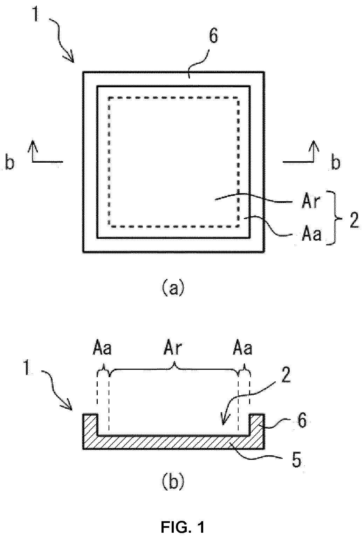

"First, as shown in FIG. 1, a spherical gas-atomized titanium powder 1 having a predetermined particle size is filled in a sintering container 2 made of high-density alumina without pressure. An inner shape of the sintering container 2 is a thin plate shape corresponding to the shape of the porous conductive plate to be manufactured. The spherical gas-atomized titanium powder 1 filled in the sintering container 2 is vacuum-sintered without pressure.".

Further, Patent Literature 2 discloses:

"A current collector for dye-sensitized solar cells, the current collector comprising a porous sintered metal thin film having a thickness of 5 $\mu$m to 60 $\mu$m, a porosity of 1% to 80%, and a large number of through holes isotropically communicated with each other, wherein, when the porous sintered metal thin film is folded while gradually changing a diameter of a mandrel to a smaller diameter in a cylindrical mandrel test, not crack is generated on an outer surface of the folded portion up to a diameter of 6 mm.";

"A method for manufacturing a current collector material for dye-sensitized solar cells, the method comprising steps (a), (b), (c) and (d) below:

(a) a formed body production step of coating a pasted composition containing a metal raw material containing a hydrogenated metal powder or a dehydrogenated metal powder, a binder component and a solvent component onto a substrate to form a film, which is then dried to volatilize the solvent component to obtain a dried formed body;
(b) a releasing step of releasing the dried formed body from the substrate;
(c) a binder removal step of removing the binder component by heating the released dried formed body; and
(d) a sintering step of sintering the dried formed body after removal of the binder at 700°C to 1100°C.".

CITATION LIST

Patent Literatures

[Patent Literature 1] Japanese Patent Application Publication No. 2002-275676 A
[Patent Literature 2] Japanese Patent Application Publication No. 2014-239023 A

SUMMARY OF THE INVENTION

Technical Problem

In order to manufacture a sheet-shaped porous metal body containing titanium, for example, a titanium-containing powder may be covered over a forming surface of a forming die in a dry process to deposit it to a predetermined thickness, and the titanium-containing powder may be heated and sintered. This can provide a porous metal body as a sintered body of the titanium-containing powder.

Here, if the sintering is carried out at a higher temperature, the strength of the porous metal body as the sintered body can be increased, but the sintered body firmly adheres to the forming die. In this case, there is a problem that the sintered body tends to crack when the sintered body is released from the forming die. This problem of cracking is more likely to occur as the sintered body becomes thinner. In order to address the above problem that the sintered body cracks, a releasing layer for facilitating the releasing of the porous metal body from the forming die after sintering has been formed over the entire forming surface of the die in advance, but in this case, it has been found that waviness might be generated on the sheet-shaped porous metal body obtained after sintering. The problem of the waviness also tends to become apparent as the sintered body is thinner to some extent.

An object of the present invention is to provide a method for manufacturing a porous metal body capable of suppressing generation of waviness and cracks, and to provide the porous metal body.

Solution to Problem

As a result of intensive studies, the present inventors have found that a titanium-containing powder is bonded and fixed to an area located on an outer edge side of a forming surface of a forming die during sintering without forming a releasing layer in that area, whereby even if the titanium-containing powder is sintered at a high temperature to some extent, the generation of waviness on the porous metal body can be satisfactorily suppressed. Further, by providing an area for forming a releasing layer other than the area located on the outer edge side of the forming surface, it is also possible to suppress the generation of cracks in the porous metal body when the porous metal body is released from the forming die.

The reason why the waviness and cracking can be thus suppressed would be as follows. The sintering of the titanium-containing powder at a relatively high temperature increases the degree of shrinkage of the titanium-containing powder. It is believed that the titanium-containing powder in contact with the releasing layer is slippery and causes random shrinkage, which would generate waviness on the sintered body. On the other hand, it is believed that if the titanium-containing powder adheres to the forming surface of the forming die during sintering, the random shrinkage can be suppressed. It is presumed that using this mechanism, the releasing layer is not formed in the area located on the outer edge side of the forming surface so that the titanium-containing powder in the middle of sintering is fixed on the outer edge side of the forming surface, whereby the random shrinkage of the titanium-containing powder in the sintered body is suppressed and, as a result, the sintered body is maintained in a flatter shape. However, the present invention is not limited to such theory.

A method for manufacturing a porous metal body according to the present invention is a method for manufacturing a sheet-shaped porous metal body containing titanium by sintering a titanium-containing powder by heating it on a forming surface of a forming die, the method comprising: an area setting step of setting, on the forming surface of the forming die, an adhesion area where it is located on an outer edge side of the forming surface and the titanium-containing powder adheres during sintering without a releasing layer, and an easily releasable area where a releasing layer is formed; after the area setting step, a powder deposition step of depositing the titanium-containing powder in a dry process on the forming surface; and after the powder deposition step, a powder sintering step of sintering the titanium-containing powder on the forming surface while heating the titanium-containing powder at a temperature of 950°C or more on the forming surface and allowing the titanium-containing powder located on the adhesion area to adhere to the adhesion area.

In the method for manufacturing a porous metal body according to the present invention, it is preferable that the titanium-containing powder has an average circularity of 0.93 or less.

In the method for manufacturing a porous metal body according to the present invention, the forming die preferably comprises at least one selected from the group consisting of carbon, quartz, graphite, magnesia, calcia, zirconia and yttria.

In the area setting step, the releasing layer can be formed by a releasing agent containing boron nitride and/or titanium boride.

In the method for manufacturing a porous metal body according to the present invention, it is preferable that the titanium-containing powder has a 90% particle size D90 of 15 $\mu$m to 50 $\mu$m.

In the method for manufacturing a porous metal body according to the present invention, a ratio of a surface area of the forming surface of the forming die on which the titanium-containing powder is deposited in the powder deposition step to a surface area of the easily releasable area is preferably 1.05 to 1.50.

Further, in the powder deposition step, it is preferable that the surface area for depositing the titanium-containing powder on the forming surface of the forming die is 64 cm$^2$ or more.

In the method for manufacturing a porous metal body according to the present invention, the titanium-containing powder may have a titanium content of 75% by mass or more.

A porous metal body according to the present invention comprises titanium, wherein the porous body has a sheet shape with a thickness of 0.2 mm to 1.0 mm, and wherein the porous body has a porosity of 20% to 65%, and a bending strength of 190 MPa or more.

The porous metal body according to the present invention may have a titanium content of 75% by mass or more.

It is preferable that in the porous metal body according to the present invention, when a sample of the porous metal body according to the present invention is placed on a flat surface and a maximum height from a position of the flat surface to a highest position on a surface of the sample is measured in a thickness direction, the maximum height is 3 times or less a thickness of the porous metal body when the thickness is 0.5 mm or more, or the maximum height is 1.5 mm or less when the thickness of the porous metal body is less than 0.5 mm.

Advantageous Effects of Invention

According to the present invention, it is possible to suppress generation of waviness and cracks in a porous metal body.

BRIEF DESCRIPTION OF THE DRAWINGS

FIG. 1(a) is a plane view showing an example of a forming die that can be used in a method for manufacturing a porous metal body according to an embodiment of the present invention, and FIG. 1(b) is a cross-sectional view taken along the line b-b of FIG. 1(a);
FIG. 2(a) is a plane view showing the forming die of FIG. 1 in a state where a releasing layer is formed on an easily releasable area of the forming surface, FIG. 2(b) is a cross-sectional view along the line b-b in FIG. 2(a);
FIG. 3(a) is a plane view of the forming die and the releasing layer of FIG. 2 together with the titanium-containing powder deposited on the forming surface, FIG. 3(b) is a cross-sectional view taken along the line b-b of FIG. 3(a);
FIG. 4(a) is a cross-sectional view showing a porous metal body manufactured according to FIGS. 1 to 3, and FIG. 4(b) is a cross-sectional view taken along the line b-b in FIG. 4(a);
FIG. 5 is a side view of a porous metal body arranged on a flat surface, showing a method for evaluating waviness of a porous metal body;
FIG. 6 is a photograph showing a porous metal body according to Comparative Example 1;
FIG. 7 is a photograph showing a porous metal body of Comparative Example 2;
FIG. 8 is a photograph showing a porous metal body according to Comparative Example 3; and
FIG. 9 is a photograph showing a porous metal body according to Comparative Example 5.

DETAILED DESCRIPTION OF THE INVENTION

Hereinafter, embodiments according to the present invention will be described in detail while referring to the drawings.

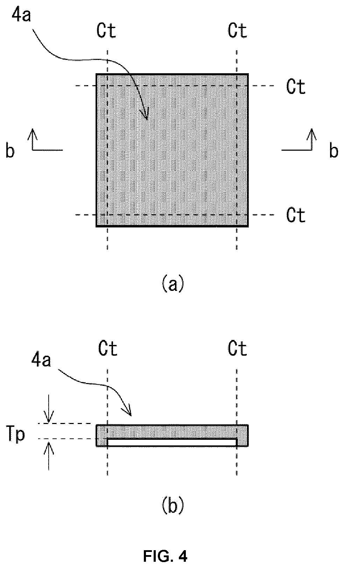

A method for manufacturing a porous metal body according to one embodiment of the present invention is by sintering a titanium-containing powder 4 by heating it on a forming surface 2 of a forming die 1 such as a setter as illustrated in FIGS. 1 to 3 to produce a sheet-shaped porous metal body 4a containing titanium as shown in FIG. 4. The manufacturing method according to this embodiment includes: an area setting step of setting, on the forming surface 2 of the forming die 1, an adhesion area Aa where it is located on an outer edge side of the forming surface 2 and the titanium-containing powder 4 adheres during sintering without a releasing layer 3, and an easily releasable area Ar where the releasing layer 3 is formed; after the area setting step, a powder deposition step of depositing the titanium-containing powder 4 on the forming surface 2 in a dry process; and after the powder deposition step, a powder sintering step of sintering the titanium-containing powder 4 on the forming surface 2 while heating the titanium-containing powder 4 at a temperature of 950°C or more on the forming surface 2, and allowing the titanium-containing powder 4 located on the adhesion area Aa to adhere to the adhesion area Aa. It should be noted that in the following descriptions, reference numerals may be omitted when they are not important.

(Titanium-Containing Powder)

As the titanium-containing powder, various powders can be used as long as they contain titanium. For example, pure titanium powder and/or titanium alloy powder can be used as the titanium-containing powder. That is, as the titanium-containing powder, pure titanium powder can be used alone, or one or more kinds of titanium alloy powders can be used, or both these pure titanium powder and titanium alloy powder may be used. Furthermore, it is possible to use powders of alloy elements such as aluminum, vanadium and iron.

The pure titanium powder has a titanium content of 95% by mass or more. That is, the pure titanium powder refers to powder substantially composed only of titanium. Specific examples of the pure titanium powder include hydride de-hydride titanium powder (so-called HDH titanium powder) obtained by hydrogenating and pulverizing sponge titanium or the like and then dehydrogenating it, and titanium hydride powder that has not been de-hydrogenated after the above pulverization. In the titanium hydride powder, which is the pure titanium powder, a hydrogen content up to 5% by mass is acceptable.

The titanium alloy powder as described above is a powder containing titanium and an alloy element(s). For example, the titanium alloy of the titanium alloy powder is an alloy or the like of titanium and a metal(s) (alloy element(s)) such as Fe, Sn, Cr, Al, V, Mn, Zr, and Mo. Specific example includes Ti-6-4 (Ti-6Al-4V), Ti-5Al-1Fe, Ti-5Al-2.5Sn, Ti-8-1-1 (Ti-8Al-1Mo-1V), Ti-6-2-4-2 (Ti-6Al-2Sn-4Zr-2Mo-0.1Si), Ti-6-6-2 (Ti-6Al-6V-2Sn-0.7Fe-0.7Cu), Ti-6-2-4-6 (Ti-6Al-2Sn-4Zr-6Mo), SP 700 (Ti-4.5Al-3V-2Fe-2Mo), Ti-17 (Ti-5Al-2Sn-2Zr-4Mo-4Cr), β-CEZ (Ti-5Al-2Sn-4Zr-4Mo-2Cr-1Fe) , TIMETAL 555, Ti-5553 (Ti-5Al-5Mo-5V-3Cr-0.5Fe), TIMETAL 21S (Ti-15Mo-2.7Nb-3Al-0.2Si), TIMETAL LCB (Ti-4.5Fe-6. 8Mo-81.5Al), 10-2-3 (Ti-10V-2Fe-3Al), Beta C (Ti-3Al-8V-6Cr-4Mo-4Cr), Ti-8823 (Ti-8Mo-8V-2Fe-3Al), 15-3 (Ti-15V-3Cr-3Al-3Sn), Beta III (Ti-11.5Mo-6Zr-4.5Sn), Ti-13V-11Cr-3Al and the like. It should be noted that the alloy elements of the titanium alloy may include Pd, Pt, Au, Ta, Nb, Ni, Ru, and the like. In the specific examples of the alloys as described above, the number attached in front of each alloy metal represents the content (% by mass) of the metal element. For example, "Ti-6Al-4V" refers to a titanium alloy containing 6% by mass of Al and 4% by mass of V as alloy elements.

The titanium-containing powder preferably has an average circularity of 0.93 or less, although not particularly limited thereto. The titanium-containing powder having the average circularity of 0.93 or less is available at a relatively low price, which is advantageous in terms of the production cost reduction. The average circularity of the titanium-containing powder is preferably 0.91 or less, and more preferably 0.89 or less. The average circularity of the titanium-containing powder may be, for example, 0.50 or more, or even 0.60 or more. Since the above HDH titanium powder and titanium hydride powder are obtained by pulverization, they tend to have a relatively small average circularity. On the other hand, the atomized powder by gas atomization or the like often has an average circularity close to 1.00 as compared to the HDH titanium powder or the like.

The average circularity of the titanium-containing powder is calculated as follows. A peripheral length (A) of a projected area of a particle of the titanium-containing powder is measured using an electron microscope, and a ratio to a peripheral length (B) of a circle having the same area as the projected area is defined as the circularity (B/A). The average circularity is determined by allowing the particles to flow in a cell together with a carrier liquid, capturing images of a large amount of particles with a CCD camera, and from 1000 to 1500 individual particle images, calculating the circularity (B/A) as described above for each particle to determine an average value of the circularities of the respective particles. The value of the circularity increases as the shape of the particle is closer to the true sphere, and the circularity of the particle having the shape of a perfect true sphere is 1.00. Conversely, the circularity value decreases as the shape of the particle comes away from the true sphere.

The titanium-containing powder can be only the pure titanium powder. Alternatively, the titanium-containing powder can be a titanium alloy powder containing titanium and an alloy element(s). One or more of their powders are appropriately selected depending on the composition of the porous metal body to be manufactured, and the like. A mass ratio of the metals in the titanium-containing powder can be, for example, titanium: alloy element = 100:0 to 75:25.

The titanium content of the titanium-containing powder is preferably 75% by mass or more. The titanium content of the titanium-containing powder may be 95% by mass or more.

The average particle size D90 of the titanium-containing powder is, for example, 15 $\mu$m to 90 $\mu$m, and preferably 15 $\mu$m to 50 $\mu$m. The use of the titanium-containing powder having such an average particle size can provide a titanium-containing porous metal body having both strength and air permeability at higher levels. The average particle size D90 means a particle size D90 of the particle size distribution (volume basis) obtained by the laser diffraction/scattering method.

(Area Setting Step)

In the area setting step, prior to depositing the titanium-containing powder 4 on the forming surface 2 of the forming die 1 in a powder deposition step as described later, the releasing layer 3 is formed in a predetermined area of the forming surface 2 of the forming die 1. By forming the releasing layer 3, the adhesion of the titanium-containing powder 4 to the forming die 1 during sintering is well suppressed, and even if the thinly deposited titanium-containing powder 4 is sintered at a relatively high temperature, the porous metal body 4a can be easily removed from the forming surface 2 of the forming die 1 after sintering.

Here, if the releasing layer is formed on the entire forming surface, it is considered that the titanium-containing powder irregularly shrinks while sliding on the releasing layer due to heating when the titanium-containing powder is sintered, and based on such a cause or the like, the sheet-shaped metal body, which is a sintered body of the titanium-containing powder, will form an undulating shape or a wavy shape to have waviness.

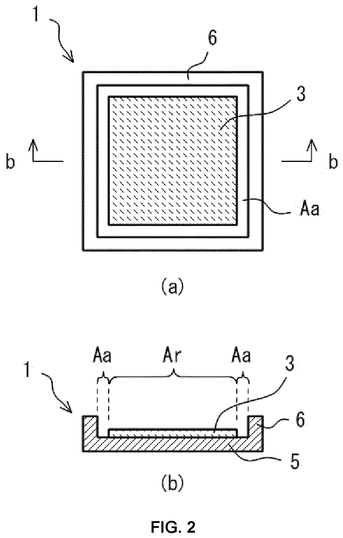

In order to suppress the generation of such waviness in the porous metal body, in this embodiment, as illustrated in FIGS. 1 and 2, the forming surface 2 is divided into an adhesion area Aa where it is a surface region located on an outer edge side of the forming surface 2 and the releasing layer 3 is not formed so that the titanium-containing powder 4 adheres during sintering; and an easily releasable area Ar where it is a surface region other than the adhesion area Aa, on which the releasing layer 3 is formed, and each area is set. That is, here, the releasing layer 3 is formed only on the easily releasable area Ar, among the adhesion area Aa and the easily releasable area Ar, such that the releasing layer will be absent in the adhesion area Aa on the outer edge side of the forming surface 2, and the releasing layer will be present in the easily releasable area Ar on its inner side.

According to this, in the powder sintering step after the powder deposition step as described later, the heating cause the adhesion area Aa where the releasing layer 3 is not present and the titanium-containing powder 4 deposited thereon react with and adhere to each other. Thus, it is believed that the titanium-containing powder 4 being sintered is fixed in the adhesion area Aa on the outer edge side, thereby suppressing random thermal shrinkage of the titanium-containing powder 4 on the releasing layer 3. Consequently, it is believed that the generation of waviness and cracks in the porous metal body 4a can be satisfactorily suppressed.

Here, the easily releasable area Ar refers to an area where the porous metal body 4a is easily released after sintering due to the presence of the releasing layer 3 on the surface, as compared to the adhesion region Aa where the releasing layer 3 is not present.

From the viewpoint of more reliably suppressing the generation of waviness and cracks, the outer edge of the forming surface 2 is the adhesive area Aa where the releasing layer 3 is absent over the entire circumference of the outer edge, as in the illustrated embodiment. However, it is not necessary that the entire circumference of the outer edge of the forming surface 2 is the adhesion area Aa. If at least a part of the outer edge of the forming surface 2 in the circumferential direction, for example, a plurality of locations, are used as the adhesion area Aa, the fixing of the titanium-containing powder 4 by adhering to the adhesion area Aa as described above, and hence suppression of the generation of waviness and/or cracks in the porous metal body 4a, can be achieved. For the forming surface 2 having a rectangle such as a square as shown in the figure, it is also considered that, for example, the four corners of the forming surface 2 are used as the adhesion area Aa where no releasing layer 3 is present, thereby enabling waviness and/or cracks of the porous metal body 4a to be suppressed.

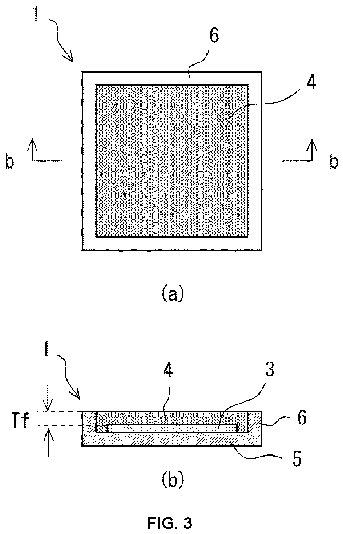

In the area setting step, the releasing layer 3 is formed only on the area of the easily releasable area Ar, among the adhesion area Aa and the easily releasable area Ar on the forming surface 2. However, in the powder deposition step as described below, the titanium-containing powder 4 is deposited not only onto the easily releasable area Ar but also onto the adhesion area Aa on the forming surface 2. In this embodiment, as can be seen from FIG. 3(b), the releasing layer 3 on the forming surface 2 will be entirely surrounded by the titanium-containing powder 4 deposited on the adhesion area Aa around the releasing layer 3 and the titanium-containing powder 4 deposited on the releasing layer 3.

Therefore, a surface area of the forming surface 2 on which the titanium-containing powder 4 is deposited in the powder deposition step (in the illustrated example, the sum of the surface areas of the adhesion area Aa and the easily releasable area Ar) will be larger than that of the easily releasable area Ar. A ratio (Ss / Sr) of a surface area Ss of the forming surface 2 on which the titanium-containing powder 4 is deposited in the powder deposition step to a surface area Sr of the easily releasable area Ar is preferably 1.05 to 1.50, and more preferably 1.10 to 1.35. By providing a higher surface area Ss for depositing the titanium-containing powder 4 than the surface area Sr of the easily releasable area Ar, the effect of suppressing the waviness in the porous metal body 4a can be sufficiently obtained. On the other hand, by preventing the surface area Ss for depositing the titanium-containing powder 4 from being not too large with respect to the surface area Sr of the easily releasable area Ar, it can suppress a difficulty to remove the sintered porous metal body 4a from the forming surface 2. Typically, the surface area Ss of the forming surface 2 on which the titanium-containing powder 4 is deposited in the powder deposition step may be 64 $cm^2$ or more, or even 100 $cm^2$ or more, or even 180 $cm^2$ or more.

The releasing layer 3 can be formed by applying a releasing agent containing, for example, boron nitride (BN) and/or titanium boride ($TiB_2$) to the area to be the easily releasable area Ar on the forming surface 2. Conversely, the area where the releasing layer 3 is formed may be the easily releasable area Ar. In other words, the releasing layer 3 may be formed on an area to be the easily releasable area Ar after that area is determined by previously dividing that area on the forming surface 2, although not limited thereto. It is also possible to form the releasing layer 3 on a predetermined area, and subsequently regard this area as the easily releasable region Ar. Any releasing agent that is not bonded to the titanium-containing powder by sintering can optionally be used, and for example, boron nitride or titanium boride can be used. The releasing layer 3 can be formed by covering such a releasing agent over the easily releasable area Ar on the forming surface 2. Alternatively, the releasing layer 3 may be formed by coating the forming surface 2 with a liquid such as a slurry in which fine particles of boron nitride and/or titanium boride are dispersed in a solvent as a releasing agent. In this case, it is preferable to dry the releasing layer 3 before depositing the titanium-containing powder.

The forming die 1 may be made of any material as long as it can adhere to the titanium-containing powder with an appropriate strength by sintering. The forming die 1 preferably includes, for example, at least one selected from the group consisting of carbon, quartz, graphite, magnesia (MgO), calcia (CaO), zirconia ($ZrO_2$) and yttria ($Y_2O_3$). That is, it is preferable that the forming surface 2 is made of such a material. The forming die 1 is made of, for example, carbon, quartz, graphite, magnesia, calcia, zirconia, or yttria. With the forming die 1 made of such materials, the titanium-containing powder 4 is fixed to the forming surface 2 by adhesion of the titanium-containing powder 4 to the adhesion area Aa during sintering, so that the waviness in the porous metal body 4a is well suppressed.

In the illustrated embodiment, the forming die 1 has a rectangular shape such as a square in a plane view as a whole, and includes: a bottom wall 5 having the forming surface 2; and a side wall 6 standing from an outer edge portion of the bottom wall 5 to surround the forming surface 2 over the entire circumference. On the inner side of the side wall 6 and on the forming surface 2, a space is defined in which the titanium-containing powder 4 is deposited. However, the shape or structure of the forming surface 2 may optionally be changed depending on various conditions of the porous metal body 4a to be manufactured, and is not limited to the illustrated one. The forming surface 2 may have, for example, an appropriate polygonal, elliptical, or circular shape in a plane view. Also, the forming die 1 having a shape that does not have the side wall 6 may be used.

(Powder Deposition Step)

In the powder deposition step, as shown in FIG. 3, the titanium-containing powder 4 is deposited in a dry process on the forming surface 2, more particularly, on the easily releasable area Ar where the releasing layer 3 is formed in the above area setting step, and on the adhesion region Aa where the releasing layer 3 is not formed. As used herein, the "dry process" means that a liquid such as a solvent or a binder is not used. In the powder deposition step, for example, the titanium-containing powder is deposited by dropping it in a gas such as air or in vacuum, rather than settling the titanium-containing powder in a slurry in which the titanium-containing powder is dispersed in a liquid.

At this time, in the easily releasable area Ar where the releasing layer 3 is present, the titanium-containing powder 4 is deposited onto the releasing layer 3. On the other hand, in the adhesion area Aa where the releasing layer 3 is not present, the titanium-containing powder 4 comes into contact with the adhesion area Aa and the titanium-containing powder 4 is directly deposited onto the adhesion area Aa.

In the powder deposition step, it is preferable to deposit the titanium-containing powder 4 at least in the deposition direction without applying pressure in order to obtain a porous metal body 4a having a predetermined air permeability or liquid permeability. This is because when the pressure is intentionally applied in the deposition direction, a dense porous metal body 4a is formed after sintering, thereby deteriorating the air permeability or liquid permeability.

More particularly, on the molding surface 2 of the molding die 1 and on the inner side of the side wall 6, the titanium-containing powder 4 is shaken off from the upper side and covered over the surface. After depositing the titanium-containing powder 4 on the forming surface 2 to some extent, a flat spatula or the like is moved along the top surface of the side wall 6 to remove a part of the titanium-containing powder 4 that has risen in the upper side than the top surface of the side wall 6 to the outside of the side wall 6. When the forming die 1 that does not have the side wall is used, a member corresponding to the side wall is arranged, and a part of the titanium-containing powder 4 that has risen in the upper direction can be then removed using the flat spatula or the like. In this case, the titanium-containing powder 4 is not intentionally pressed in its deposition direction. As a result, the titanium-containing powder 4 can be deposited on the inner side of the side wall 6 of the forming die 1 by the height of the side wall 6. In the powder sintering step as described below, the titanium-containing powder 4 is placed in a furnace together with the forming die 1 and heated to form a sheet-shaped porous metal body 4a corresponding to the space on the forming surface 2 of the container-shaped forming die 1. The thickness of the sheet-shaped porous metal body 4a can be adjusted by changing the height of the side wall 6 of the forming die 1 or the like.

The thickness of the titanium-containing powder 4 deposited on the forming surface 2 can be appropriately set depending on the thickness of the porous metal body 4a to be manufactured. A deposition thickness Tf of the titanium-containing powder 4 deposited on the easily releasable area Ar can be appropriately set in view of a thickness Tp of the porous metal body 4a, which will be described below, and the like. It is preferable that the thickness of the deposited titanium-containing powder 4 is thicker by 0.1 mm or more than the deposition thickness Tf in the adhesion region Aa.

(Powder Sintering Step)

After depositing the titanium-containing powder 4 onto the forming surface 2 in the powder deposition step, a powder sintering step is performed to heat the titanium-containing powder 4 at a temperature of 950°C or more on the forming surface 2.

Here, by heating at the temperature of 950°C or more, the titanium-containing powder 4 is sintered as a whole, and the titanium-containing powder 4 that is in contact with the adhesion area Aa without the releasing layer 3 is attached to the adhesion area Aa. It is believed that the titanium-containing powder 4 is attached and fixed to the adhesion area Aa on the outer edge side of the forming surface 2, thereby suppressing random shrinkage of the titanium-containing powder 4 on the releasing layer 3 in the easily releasable area Ar. As a result, it is believed that the generation of waviness and cracks in the porous metal body 4a formed by sintering the titanium-containing powder 4 is suppressed.

In the powder sintering step, the titanium-containing powder 4 can be heated and sintered in a reduced pressure atmosphere such as vacuum or in an inert atmosphere. This can prevent the titanium-containing powder 4 from being excessively oxynitrided during sintering. More particularly, for example, the degree of vacuum can reach $10^{-4}$ Pa to $10^{-2}$ Pa in a vacuum furnace to carry out the sintering of the titanium-containing powder 4 in a reduced pressure atmosphere. Alternatively, the sintering of the titanium-containing powder 4 can be carried out in an inert atmosphere with the atmosphere being an argon gas. Here, it should be noted that the nitrogen gas does not correspond to the inert gas.

In the powder sintering step, the sintering temperature during sintering is 950 °C or more. If this is less than 950 °C, the porous metal body to be manufactured may not have a desired strength. The sintering temperature is preferably 1000 °C or more. On the other hand, the sintering temperature is preferably 1200 °C or less, and more preferably 1100 °C or less. By thus preventing the temperature from being excessively increased, it is possible to suppress relatively early decomposition of the forming die 1 due to adhesion of the titanium-containing powder 4 in the adhesion area Aa.

Further, in the powder sintering step, the sintering temperature is preferably maintained for 30 minutes to 480 minutes, and more preferably 60 minutes to 360 minutes. That is, a period of time at 950 °C or more as described above is preferably maintained for 30 minutes to 480 minutes, and further 60 minutes to 360 minutes. By preventing the maintaining time of the sintering temperature from being excessively shortened, the particles of the titanium-containing powder 4 are sufficiently firmly bonded to each other, so that the strength of the porous metal body 4a can be further increased. Further, by preventing the maintaining time from being prolonged, any densification of the porous metal body 4a due to excessive sintering can be suppressed, so that the porous metal body 4a can satisfactorily exhibit the required air permeability or liquid permeability.

In addition, when the titanium-containing powder 4 contains titanium hydride, it is preferable to perform a preliminary heating treatment for dehydrogenation before carrying out the sintering. The sintering may be carried out after cooling the titanium-containing powder once after the preliminary heating treatment, or the sintering may be carried out after further heating the titanium-containing powder 4 after the preliminary heating treatment. The preliminary heating treatment can be carried out, for example, in a vacuum furnace with a degree of vacuum reaching $10^{-4}$ Pa to $10^{-2}$ Pa in a reduced pressure atmosphere. The temperature and time of the preliminary heating treatment can be appropriately determined in view of the content of the titanium hydride powder. To give an example, the temperature of the preliminary heating treatment can be 450 °C to 700 °C. Also, the time for the preliminary heating treatment can be, for example, 30 minutes to 360 minutes.

After sintering the titanium-containing powder 4, the sheet-shaped porous metal body 4a obtained as a sintered body of the titanium-containing powder 4 is released from the forming surface 2 of the forming die 1 and removed from the forming die 1. Here, since the releasing layer 3 is not present in the adhesion area Aa of the forming surface 2, the porous metal body 4a may adhere to the forming surface 2 in the adhesion area Aa, but since the releasing layer 3 is present on the easily releasable area Ar, the porous metal body 4a as a whole can be relatively easily released from the forming surface 2. It is possible to remove the porous metal body 4a from the forming surface 2 so that at least the portion of the porous metal body 4a positioned on the easily releasable Ar is not damaged due to the release. When the releasing layer 3 is formed of a releasing agent powder, the releasing agent powder may enter the surface of the porous metal body 4a that has been in contact with the releasing layer 3 to some extent, but the releasing agent powder can be removed by an appropriate method such as blowing air or washing with water.

As shown in FIG. 4, for example, the porous metal body 4a removed from the forming surface 2 may be cut at a cutting position Ct substantially corresponding to a boundary position between the adhesion area Aa and the easily releasable area Ar, in order to remove the outer edge portion located on the adhesion area Aa. By such a way, the inner portion having a good property in the forming die 1, which has been located on the releasing layer 3 of the easily releasable area Ar and has not substantially adhered to the forming surface 2, can be removed as the porous metal body 4a. Moreover, the thickness of the porous metal body 4a removed by the above cutting becomes more uniform.

It should be noted that when the forming surface 2 and the porous metal body 4a strongly adhered to each other in the adhesion area Aa after sintering, the porous metal body 4a may crack if it is forcibly released. In such a case, the porous metal body 4a may be removed from the forming die 1 after cutting at the cutting position Ct.


(Porous Metal Body)

The porous metal body manufactured as described above has suppressed generation of waviness and/or cracks.

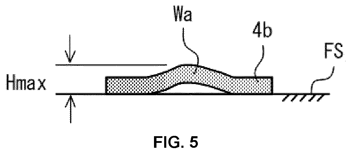

The waviness of the porous metal body can be evaluated by the following test:
First, the porous metal body 4a is placed on a flat surface of a surface plate or the like, and a sample having a 50 mm$^2$ square flat surface shape including the highest position from the flat surface, which is visually confirmed from the side direction of the porous metal body 4a, is cut and collected. If the porous metal body 4a has a size such that the 50 mm$^2$ sample cannot be cut, the cutting operation is not necessary, and the porous metal body 4a is used for the sample as it is. Subsequently, as shown in FIG. 5, the sample 4b was placed on the flat surface FS as described above, and a maximum height Hmax from the position of the flat surface FS to the highest position of the surface of the sample 4b in the thickness direction is measured.

Depending on the magnitude of the maximum height Hmax, it is possible to evaluate the degree of waviness Wa at the position where the waviness Wa generated in the porous metal body 4a is the largest. When a thickness Tp of the porous metal body 4a is 0.5 mm or more, it can be considered that the waviness is not generated if the maximum height Hmax is three times or less the thickness Tp. When the thickness Tp of the porous metal body 4a is less than 0.5 mm, it is recognized that the waviness is not generated if the maximum height Hmax is 1.5 mm or less.

The porous metal body 4a contains titanium, and is made of pure titanium or a titanium alloy, for example. The content of titanium in the titanium alloy porous metal body 4a may be 75% by mass or more. In some cases, the content of titanium in the pure titanium porous metal body 4a may be 98% by mass or more.

An outer shape of the porous metal body is a sheet shape as a whole. The thickness Tp of the sheet-shaped porous metal body 4a is, for example, 0.2 mm to 1.0 mm, or 0.3 mm to 0.8 mm, or 0.5 mm to 0.8 mm. Also, the thickness Tp of the sheet-shaped porous metal body 4a can be, for example, 0.2 mm to 0.5 mm. The porous metal body having such a lower thickness Tp will also have relatively high strength while ensuring the required air permeability or liquid permeability. The thickness Tp of the porous metal body 4a can be measured with a thickness gauge, for example, using an ABS digital thickness gauge 547-321 from Mitutoyo Corporation or the like. It should be noted that when the porous metal body 4a is cut at the cutting position Ct or the like as described above, the thickness Tp of the porous metal body means the thickness after the cutting.

The porous metal body 4a preferably has a porosity of 20% to 65%, and more preferably 30% to 50%, and even more preferably 30% to 45%. The porosity in the range as described above can allow the air permeability or liquid permeability to be achieved depending on applications. A porosity $\varepsilon$ of the porous metal body 4a is measured by the following equation using an apparent density $\rho'$ calculated from a volume and mass obtained from a width, length, and thickness of the porous metal body 4a and a true density $\rho$ of the metal forming the porous metal body 4a (for example, 4.51 g/cm$^3$ for pure titanium and 4.43 g/cm$^3$ for Ti-6Al-4V):

$$\varepsilon = (1 - \rho' / \rho) \times 100$$

The porous metal body 4a preferably has a bending strength of 190 MPa or more, typically 210 MPa or more. Although the upper limit of the bending strength of the porous metal body 4a is not particularly limited, it may be 500 MPa or less. The bending strength of the porous metal body 4a is measured by a three-point bending test. A sample of the porous metal body 4a to be subjected to the three-point bending test has a width of 15 mm and a length of 60 mm, an indenter diameter is 5 mm, a fulcrum diameter is 5 mm, and a distance between fulcrums is 25 mm. For the three-point bending test, a universal testing machine from Shimadzu Corporation can be used.

EXAMPLES

Next, porous metal bodies were experimentally manufactured by the method for manufacturing the porous metal body according to the present invention, and will be described below. However, descriptions herein are merely for illustration, and are not intended to be limited thereto.

Using raw material powders (titanium-containing powders) as shown in Table 1, porous metal bodies were manufactured under the conditions as shown in Table 1. In Table 1, "Ti" in the type of the raw material powder means titanium powder, and "TiH" means titanium hydride powder. Both the titanium powder and the titanium hydride powder were produced through hydrogenation and pulverization of pure titanium. The titanium powder is so-called HDH titanium powder which is further dehydrogenated after the pulverization. The hydrogen content of the titanium hydride powder was in the range of 1% to 5% by mass. In Example 7, 30% by mass of titanium hydride powder was mixed.

In Examples 1 to 13, as shown in FIGS. 1 to 4, the releasing agent was previously applied to the forming surface having a predetermined size of the forming die so that each area ratio as shown in Table 1 was obtained, except for the outer edge side of the forming surface to form a releasing layer. The raw material powder was then deposited in a dry process on the forming surface and heated to be sintered. The term "area ratio" as used herein means a ratio of a surface area of the forming surface on which the raw material powder is deposited to a surface area of the easily releasable area where the releasing layer is formed. The surface area of the forming surface on which the raw material powder is deposited is shown in Table 1 as the "Size" of the "Forming Die". In Examples 6 and 7 where the raw material powder contained TiH, the raw material powder was preliminary-heated (at 600°C for 1 hour) for dehydrogenation before sintering.

In each of Comparative Examples 1 and 2, no releasing layer was formed on the forming surface. In each of Comparative Examples 3 and 5, the ratio of the surface area depositing the raw material powder to the surface area of the easily releasable area was 1:1 (same area). In addition, Comparative Example 5 increased the sintering time to 6 hours. In Comparative Example 4, the heating temperature (sintering temperature) for sintering was 900°C, and the maintaining time was 1 hour. In Comparative Example 2, a forming die made of boron nitride was used. In each of Comparative Examples 1 to 5, other conditions were substantially the same as those in Example 1.

The thickness, porosity, three-point bending strength, and waviness (maximum height Hmax) of each porous metal body manufactured in Examples and Comparative Examples as described above were measured according to the measurement methods as described above. In each of Comparative Examples 1 to 3 and 5, waviness and cracks were generated during sintering, and so the porosity and three-point bending strength were not measured. As described above, the evaluation of waviness was performed on a sample collected from each porous metal body, and when the thickness of each porous metal body was 0.5 mm or more, it was determined that no waviness was generated if the maximum height Hmax was three times or less the thickness. Also, when the thickness of each porous metal body was less than 0.5 mm, it was evaluated that no waviness was generated if the maximum height Hmax was 1.5 mm or less. Also, for the cracks, both surfaces of the porous metal body except for the portion located on the adhesion area were visually observed, and if even one crack was found on the surfaces, it was evaluated as cracking.

These results are also shown in Table 1.

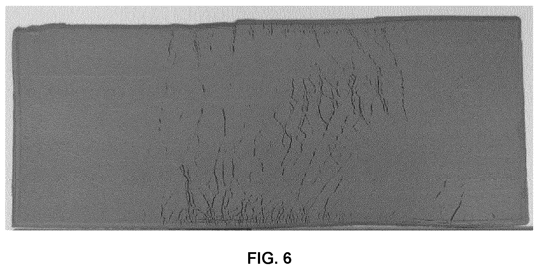

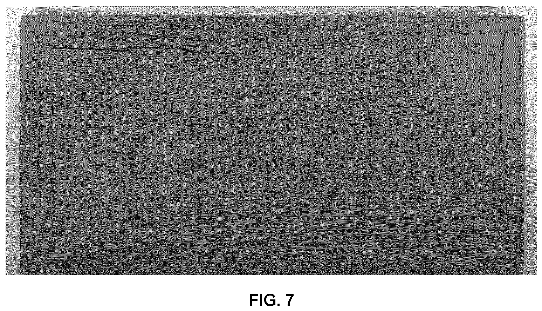

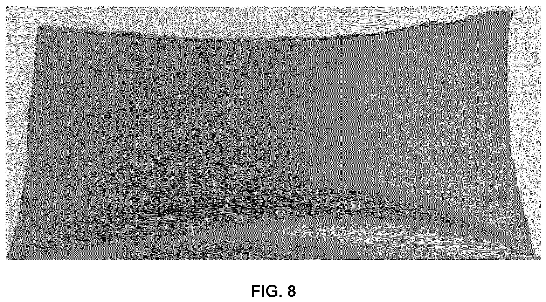

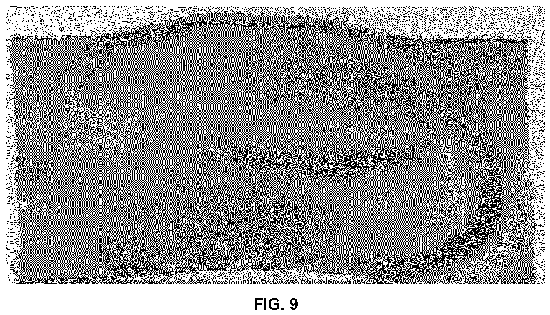

Photographs of the porous metal bodies according to Comparative Examples 1 to 3 and 5 are shown in FIGS. 6 to 9, respectively. It is found that cracks were generated in the porous metal body according to Comparative Example 1 in FIG. 6 and the porous metal body according to Comparative Example 2 in FIG. 7. Also, the waviness was generated in the porous metal body according to Comparative Example 3 in FIG. 8 and in the porous metal body according to Comparative Example 5 in FIG. 9.

Table 1

| | Manufacturing Conditions | | | | | | | | | Evaluations | | | | |
| | Raw Material Powder | | | Forming Die | | Releasing Agent | Area Ratio | Sintering | | | | | | |
| | Type | D90 (pm) | Ave. Circularity | Type | Size (cm2) | Type | Release Agent: Raw Material Powder | Temp. (°C) | Time | Thickness (mm) | Porosity (%) | 3-Point Bending Strength (MPa) | After Sintering Waviness | After Sintering Cracks |
|---|---|---|---|---|---|---|---|---|---|---|---|---|---|---|
| Ex. 1 | Ti | 30 | 0.89 or less | Carbon | 200 | BN | 1.00 : 1.15 | 1000 | 3h | 0.5 | 43 | 215 | Absent | Absent |
| Ex. 2 | Ti | 40 | 0.89 or less | Carbon | 200 | BN | 1.00: 1.15 | 1000 | 3h | 0.5 | 50 | 190 | Absent | Absent |
| Ex. 3 | Ti | 20 | 0.89 or less | Carbon | 200 | BN | 1.00 : 1.15 | 1000 | 3h | 0.5 | 39 | 421 | Absent | Absent |
| Ex. 4 | Ti | 30 | 0.89 or less | Carbon | 200 | BN | 1.00 : 1.15 | 1000 | 3h | 0.2 | 49 | 200 | Absent | Absent |
| Ex. 5 | Ti | 30 | 0.89 or less | Carbon | 200 | BN | 1.00 : 1.15 | 1000 | 3h | 0.8 | 44 | 208 | Absent | Absent |
| Ex. 6 | TiH | 30 | 0.89 or less | Carbon | 200 | BN | 1.00 : 1.96 | 1000 | 3h | 0.5 | 50 | 217 | Absent | Absent |
| Ex. 7 | Ti:TiH 70:30 | 20 | 0.89 or less | Carbon | 200 | BN | 1.00 : 1.15 | 1000 | 3h | 0.5 | 49 | 200 | Absent | Absent |
| Ex. 8 | Ti | 30 | 0.89 or less | Quartz | 200 | BN | 1.00 : 1.15 | 1000 | 3h | 0.5 | 42 | 210 | Absent | Absent |
| Ex. 9 | Ti | 30 | 0.89 or less | Carbon | 625 | BN | 1.00 : 1.15 | 1000 | 3h | 0.5 | 51 | 217 | Absent | Absent |
| Ex. 10 | Ti | 30 | 0.89 or less | Carbon | 200 | BN | 1.00 : 1.05 | 1000 | 3h | 0.5 | 37 | 225 | Absent | Absent |
| Ex. 12 | Ti | 30 | 0.89 or less | Carbon | 200 | BN | 1.00 : 1.15 | 950 | 3h | 0.5 | 49 | 190 | Absent | Absent |
| Ex. 13 | Ti | 30 | 0.89 or less | Carbon | 200 | BN | 1.00:1.15 | 1100 | 3h | 0.5 | 36 | 261 | Absent | Absent |
| Comp. 1 | Ti | 30 | 0.89 or less | Carbon | 200 | Absent | | 1000 | 3h | 0.5 | | | Absent | Present |
| Comp. 2 | Ti | 30 | 0.89 or less | BN | 200 | Absent | | 1000 | 3h | 0.5 | | | Absent | Present |
| Comp. 3 | Ti | 30 | 0.89 or less | Carbon | 200 | BN | Same (1:1) | 1000 | 3h | 0.5 | | | Present | Absent |
| Comp. 4 | Ti | 30 | 0.89 or less | Carbon | 200 | BN | 1.00 : 1.15 | 900 | 1h | 0.5 | 57 | 45 | Absent | Absent |
| Comp. 5 | Ti | 30 | 0.89 or less | Carbon | 200 | BN | Same (1:1) | 1000 | 6h | 0.5 | | | Present | Absent |

As shown in Table 1, in each of Examples 1 to 13, waviness and cracks were not generated in the porous metal bodies after sintering. Therefore, according to the present invention, it was suggested that the generation of waviness and cracks in the porous metal body can be suppressed.

Description of Reference Numerals

1 forming die
2 forming surface
3 releasing layer
4 titanium-containing powder
4a porous metal body
4b sample collected from porous metal body
5 bottom wall
6 side wall
Ar easily releasable area
Aa adhesion area
Tf deposition thickness of titanium-containing powder
Tp thickness of porous metal body
Ct cutting position
FS flat surface
Hmax maximum height
Wa waviness

**Claims**

1. A method for manufacturing a sheet-shaped porous metal body containing titanium by sintering a titanium-containing powder by heating it on a forming surface of a forming die, the method comprising:

   an area setting step of setting, on the forming surface of the forming die, an adhesion area where it is located on an outer edge side of the forming surface and the titanium-containing powder adheres during sintering without a releasing layer, and an easily releasable area where a releasing layer is formed;
   after the area setting step, a powder deposition step of depositing the titanium-containing powder in a dry process on the forming surface; and
   after the powder deposition step, a powder sintering step of sintering the titanium-containing powder on the forming surface while heating the titanium-containing powder at a temperature of 950°C or more on the forming surface and allowing the titanium-containing powder located on the adhesion area to adhere to the adhesion area.

2. The method according to claim 1, wherein the titanium-containing powder has an average circularity of 0.93 or less.

3. The method according to claim 1 or 2, wherein the forming die comprises at least one selected from the group consisting of carbon, quartz, graphite, magnesia, calcia, zirconia and yttria.

4. The method according to any one of claims 1 to 3, wherein in the area setting step, the releasing layer is formed by a releasing agent containing boron nitride and/or titanium boride.

5. The method according to any one of claims 1 to 4, wherein the titanium-containing powder has a 90% particle size D90 of 15 $\mu$m to 50 $\mu$m.

6. The method according to any one of claims 1 to 5, wherein a ratio of a surface area of the forming surface of the forming die on which the titanium-containing powder is deposited in the powder deposition step to a surface area of the easily releasable area is 1.05 to 1.50.

7. The method according to any one of claims 1 to 6, wherein in the powder deposition step, the surface area of the forming surface of the forming die on which the titanium-containing powder is deposited is 64 cm$^2$ or more.

8. The method according to any one of claims 1 to 7, wherein the titanium-containing powder has a titanium content of 75% by mass or more.

9. A porous metal body comprising titanium, wherein the porous body has a sheet shape with a thickness of 0.2 mm to 1.0 mm, and wherein the porous body has a porosity of 20% to 65%, and a bending strength of 190 MPa or more.

10. The porous metal body according to claim 9, wherein the porous metal body has a titanium content of 75% by mass or more.

11. The porous metal body according to claim 9 or 10, wherein,

when a sample of the porous metal body is placed on a flat surface and a maximum height from a position of the flat surface to a highest position on a surface of the sample is measured in a thickness direction, the maximum height is 3 times or less a thickness of the porous metal body when the thickness is 0.5 mm or more, or the maximum height is 1.5 mm or less when the thickness of the porous metal body is less than 0.5 mm.

(a)

(b)

FIG. 1

(a)

(b)

FIG. 2

**EP 4 227 428 A1**

FIG. 3

4a

Ct          Ct

Ct

b          b

Ct

Ct

(a)

Ct          Ct

4a

Tp

(b)

FIG. 4

FIG. 5

FIG. 6

FIG. 7

FIG. 8

FIG. 9

## INTERNATIONAL SEARCH REPORT

| International application No. |
|---|
| **PCT/JP2021/034169** |

**A. CLASSIFICATION OF SUBJECT MATTER**

*C22C 14/00*(2006.01)i; *C22C 1/08*(2006.01)i; *B22F 3/11*(2006.01)i
FI: B22F3/11 Z; C22C1/08 F; C22C14/00 Z

According to International Patent Classification (IPC) or to both national classification and IPC

**B. FIELDS SEARCHED**

Minimum documentation searched (classification system followed by classification symbols)

C22C14/00; C22C1/08; B22F3/11

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

Scopus

**C. DOCUMENTS CONSIDERED TO BE RELEVANT**

| Category* | Citation of document, with indication, where appropriate, of the relevant passages | Relevant to claim No. |
|---|---|---|
| X | JP 2013-078556 A (SHINSHU UNIV) 02 May 2013 (2013-05-02) paragraphs [0079]-[0110] | 9-11 |
| A | | 1-8 |
| A | WO 2019/180797 A1 (TOHO TITANIUM CO LTD) 26 September 2019 (2019-09-26) | 1-11 |
| A | JP 2011-041640 A (INOAC CORP) 03 March 2011 (2011-03-03) | 1-11 |
| A | JP 2000-309806 A (MITSUBISHI MATERIALS CORP) 07 November 2000 (2000-11-07) | 1-11 |

| ☐ Further documents are listed in the continuation of Box C. | ☑ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/034169**

| Patent document cited in search report | | | Publication date (day/month/year) | Patent family member(s) | | | Publication date (day/month/year) |
|---|---|---|---|---|---|---|---|
| JP | 2013-078556 | A | 02 May 2013 | US 2014/0336779 A1 paragraphs [0096]-[0123] WO 2013/042388 A1 | | | |
| WO | 2019/180797 | A1 | 26 September 2019 | US 2021/0066723 A1 EP 3718664 A1 | | | |
| JP | 2011-041640 | A | 03 March 2011 | (Family: none) | | | |
| JP | 2000-309806 | A | 07 November 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002275676 A
- JP 2014239023 A